(19) Europäisches Patentamt
European Patent Office
Office européen des brevets

(11) **EP 2 396 989 B1**

(12) **EUROPEAN PATENT SPECIFICATION**

(45) Date of publication and mention
of the grant of the patent:
**17.08.2016 Bulletin 2016/33**

(21) Application number: **09788484.5**

(22) Date of filing: **10.02.2009**

(51) Int Cl.:
*H04W 24/08* (2009.01)     *H04L 12/26* (2006.01)

(86) International application number:
**PCT/SE2009/050133**

(87) International publication number:
**WO 2010/093289 (19.08.2010 Gazette 2010/33)**

(54) **A NETWORK ELEMENT AND A METHOD OF OPERATING A NETWORK ELEMENT IN A TELECOMMUNICATIONS NETWORK**

NETZELEMENT UND VERFAHREN ZUM BETRIEB EINES NETZELEMENTS IN EINEM TELEKOMMUNIKATIONSNETZ

ELÉMENT DE RÉSEAU ET PROCÉDÉ D'EXPLOITATION D'UN ÉLÉMENT DE RÉSEAU DANS UN RÉSEAU DE TÉLÉCOMMUNICATIONS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**21.12.2011 Bulletin 2011/51**

(73) Proprietor: **Telefonaktiebolaget LM Ericsson (publ)**
**164 83 Stockholm (SE)**

(72) Inventors:
• **STJERNHOLM, Paul**
  **S-181 60 Lidingö (SE)**
• **NYLANDER, Tomas**
  **S-139 34 Värmdö (SE)**
• **ZEE, Oscar**
  **S-118 67 Stockholm (SE)**

(74) Representative: **Ericsson**
**Patent Development**
**Torshamnsgatan 21-23**
**164 80 Stockholm (SE)**

(56) References cited:
**EP-A1- 1 102 442     WO-A1-2005/076644**
**WO-A2-2007/016337     US-A1- 2002 136 233**
**US-A1- 2006 045 017     US-A1- 2006 215 596**
**US-A1- 2007 230 413**

**Description**

Technical Field

The present invention relates to a network element and a method of operating a network element in a telecommunications network, and in particular to a network element and a method for enabling throughput or data loss to be determined for a communication link between the network element and another network element in the telecommunications network.

Background

Specification is ongoing in the 3rd Generation Partnership Project (3GPP) for E-UTRAN (Evolved Universal Terrestrial Radio Access Network), which is the next generation of Radio Access Network. Another name used for E-UTRAN is the Long Term Evolution (LTE) Radio Access Network (RAN). A radio base station in this concept is called an eNB (E-UTRAN NodeB). The core network in LTE is also evolved, and this is referred to as System Architecture Evolution (SAE).

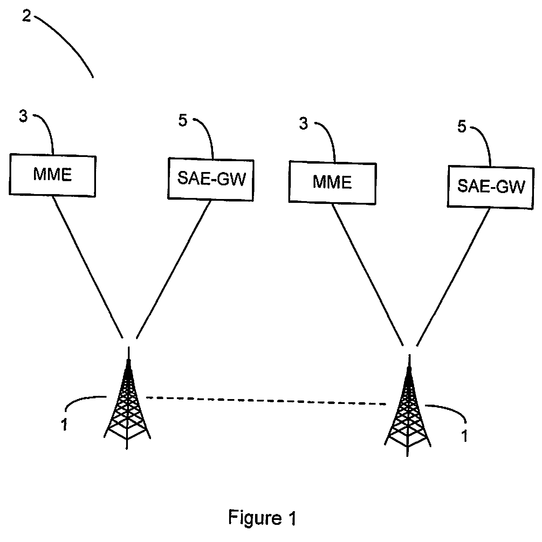

Figure 1 schematically illustrates the architectural model of a telecommunications network 2 as specified, for example, in 3GPP TS 36.300 (i.e. the E-UTRAN).

The network comprises a plurality of radio base stations 1, and a plurality of so-called mobility management entities (MMEs) 3. In the illustrated embodiment, only two radio base stations and only two MMEs are shown. However, it will be apparent to those skilled in the art that any number of such network nodes is contemplated, and in practice a network will have many more MMEs and radio base stations.

Each radio base station 1 is connected to one or more other radio base stations over interfaces known as X2 interfaces (shown as a dashed line in Figure 1). Each radio base station 1 is further connected to one or more MMEs 3 over interfaces known as S1 interfaces (shown as solid lines in Figure 1). The radio base stations 1 may be connected to the same MME 3, or to different MMEs 3 as shown in Figure 1.

Each radio base station 1 may also be using one or more system architecture evolution gateways (SAE-GW) 5, including serving gateways (S-GWs) and public data network gateways (P-GWs), an eNB being connected to serving gateways (S-GWs) via S1 interfaces.

The user plane for S1 and X2 interfaces is based on GTP tunnels, i.e. 'user data'/GTP/UDP/IP. S1 and X2 interfaces traverse over IP networks where performance, such as throughput and data loss, may be unknown. Also, in many cases IP security (IPsec) is used to achieve secure signalling on S1 and X2 interfaces. In those cases a Security GateWay (SEGW) will also encrypt/decrypt the payload and potentially add to the delay, and therefore affect the throughput, and possibly the data loss.

The throughput may further depend on the traffic load and the QoS mechanisms used in the IP transport, for example dependent on the DiffServ Code Point (DSCP) used.

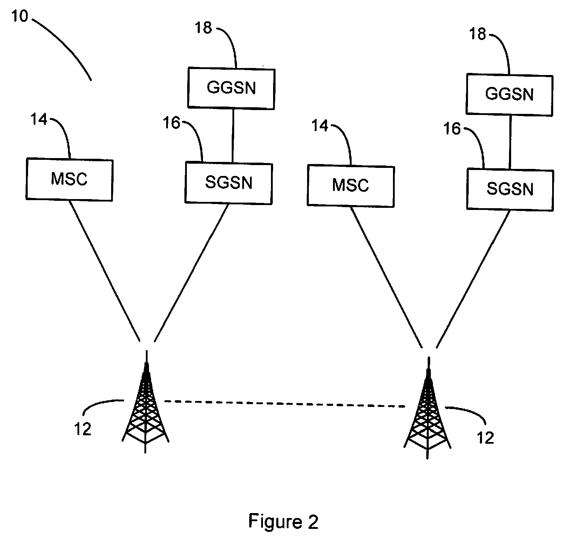

Figure 2 shows a further telecommunications network 10, known as a Universal Terrestrial Radio Access Network (UTRAN) with the so-called "flat" architecture.

The UTRAN 10 comprises a plurality of radio base stations 12, each connected to one or more mobile switching centres (MSCs) 14, and one or more serving GPRS support nodes (SGSNs) 16 over Iu interfaces. The SGSNs 16 are further connected to gateway GPRS support nodes (GGSNs) 18, which act as the gateway between the UTRAN and other networks.

In conventional UTRANs, each radio base station is further connected to a radio network controller (RNC). However, in the illustrated "flat" architecture, the functionality of the RNC is incorporated into the radio base station.

In the UTRAN 10, therefore, GTP is also used as a tunnelling protocol to transport user payload over the interfaces between the radio base stations 12 and the SGSNs 16, and between the SGSNs 16 and the GGSNs 18. The RNC (incorporated into the radio base station 12), the SGSN 16 and the GGSN 18 all implement GTP-U for user plane data traffic. The SGSN 16 and the GGSN 18 also implement GTP-C for control signalling.

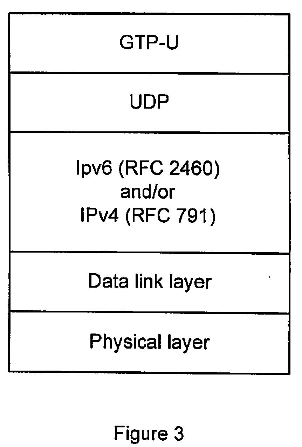

Figure 3 shows a transport network layer for data streams in the user plane on S1/X2 interfaces in LTE and Iu interfaces in UTRAN.

In telecommunications networks such as those described above it is possible to determine at a source node the throughput of a downlink from the source node to a target node on the user plane, for example measured as bytes per second. This is done by measuring locally in the source node the amount of data transmitted per second to the target node. However, such a technique has the disadvantage of not knowing whether the data transmitted actually reaches the target node, and is not therefore a true indication of throughput.

Similarly, it is possible to measure at a target node the throughput of an uplink from the source node to the target node on the user plane. This is done by determining, at the target node, the amount of data received per second at the target node. However, such a technique has the disadvantage of not knowing what amount of data was actually transmitted from the source node, which again means that this is not a true indication of throughput.

Furthermore, the GPRS Tunnelling Protocol (GTP), e.g. as defined in 3GPP TS29.060, has the disadvantage that it has no specified procedures, methods or messages to obtain a certain measure of quality, for example a true throughput or packet loss on the user plane.

Document WO 2007/016337 A2 describes a system and method for service quality management for wireless devices, i.e. for detecting and recording events related to quality of service provided by a network to a wireless device, by e.g. detecting a first network performance parameter of a first network and detecting a second network performance parameter of a second network.

Document US 2006/0215596 A1 describes packet sniffing for detecting quality of service.

Document US 2007/0230413 A1 discloses a transmission rate as the difference of a number of packets received (packet #100-packet#1) divided by a time difference corresponding to the time between the time instance for the reception of the later packet, Treceive100, and the time instance for sending the earlier packet, Tsend1. Such an estimated link throughput may be biased and lower than the actual transmission rate.

<u>Summary</u>

It is an aim of embodiments of the present invention to provide a network element and a method that enables throughput and/or data loss to be determined more accurately in a telecommunications network.

According to aspects of the present invention, there is provided a network element and a method in a first network element according to the independent claim s .

Embodiments of the invention has the advantage of enabling a "true" indication of quality, such as throughput or data loss to be determined for a communication link.

Other objects, advantages and novel features of the invention will become apparent from the following detailed description of the invention when considered in conjunction with the accompanying drawings.

<u>Brief description of the drawings</u>

For a better understanding of the present invention, and to show how it may be put into effect, reference is now made, by way of example, to the following drawings and preferred embodiments of the invention in which:

Figure 1 shows an architectural model for an evolved UTRAN Radio Access Network;

Figure 2 shows an architectural model for a "flat" UTRAN network;

Figure 3 shows a transport layer for data streams in the user plane on S1/X2 interfaces in LTE and Iu interfaces in UTRAN;

Figure 4 illustrates a method according to an embodiment of the present invention;

Figure 5 shows the steps performed at a first network element for determining the throughput of an uplink to the first network element;

Figure 6 shows the steps performed at a first network element for determining the data loss on an uplink to the first network element;

Figure 7 shows the steps performed at a first network element for determining the throughput of a downlink from the first network element;

Figure 8 shows the steps performed at a first network element for determining data loss on a downlink from the first network element; and

Figure 9 shows a network element according to an embodiment of the present invention.

<u>Detailed description</u>

The embodiments of the present invention provide a method for determining throughput and data loss between a first network element of a telecommunications network and a second network element of that network, for example a telecommunications network as described with respect to Figures 1 and 2. The first and second network elements may include, but are not limited to, any of the following, as described in greater detail below: a radio base station, a SAE-GW, an RNC, an SGSN or a GGSN, depending on the type of telecommunications network in which the method is employed. As such, although the various embodiments of the invention are described below in relation to a GPRS Tunnelling Protocol (GTP) in a SAE/LTE telecommunications network, it is noted that the invention is applicable to other protocols and other telecommunications network.

According to a first aspect of the invention, there is provided a method that enables a first network element, for example a target node (i.e. the receiving side), to determine the actual received throughput of an uplink from a second network element, for example a source node (i.e. the transmitting side) - this actual throughput also referred to herein as "goodput". Similarly, as will be described in further detail later in the application, according to this first aspect of the invention the first network element can determine the true throughput or goodput of a downlink from the first network element to the second network element, (in which case the first network element is effectively a source node, and the second network element a target node).

According to a second aspect of the invention, there is provided a method that enables the first network element (target node) to determine the true data loss (for example packet loss) of an uplink from the second network element (source node) to the first network element. Similarly, according to this second aspect of the present invention the first network element can determine the true data loss of a downlink from the first network element to the second network element, (in which case the first network element is effectively a source node and the second network element a target node).

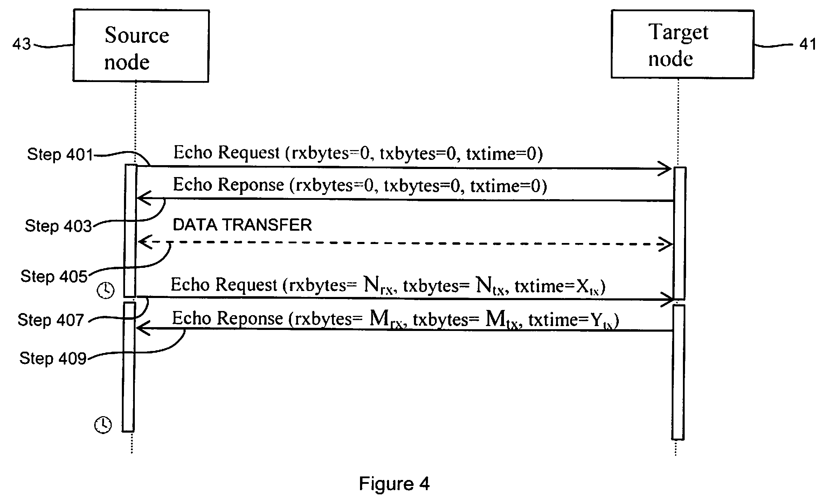

Figure 4 provides an overview of the messaging that may be employed between a first network element and a second network element in a telecommunications network, for enabling a true throughput and/or data loss to be determined for an uplink to, or downlink from a particular network element. In the illustrated embodiment vendor specific parameters will be described as being added to Echo Request and Echo Response messages. It will be appreciated, however, that the invention is not limited to the use of these particular messages, and is equally applicable to the parameters being conveyed in other ways.

In step 401 a first network element 41, for example a target node, receives an Echo Request message from a second network element 43, for example a source node. The Echo Request message includes one or more parameters relating to the second network element 43. In the example described the Echo Request message includes the parameters "rxbytes", "txbytes" and "txtime", defining the number of received bytes, the number of transmitted bytes, and the active transmission time, respectively, for the second network element 43 since its last Echo procedure. When step 401 is the first Echo procedure triggering the determination of true throughput and/or data loss, the Echo Request message sent by the second network element 43 in step 401 could, for example, have the parameters "rxbytes", "txbytes" and "txtime" set to zero to indicate that the procedure should be started as shown in Figure 4. It is noted that other ways can be used to indicate that the procedure should be started or stopped, for example the use of predefined values for these information elements, dedicated information elements, or dedicated messages. Once the second network element 43 has transmitted the Echo Request message, step 401, the second network element 43 starts logging the number of transmitted bytes "txbytes" and the active transmit time "txtime". It is noted that when the Echo Request message transmitted by the second network element 43 is the first Echo Request message used to start a procedure, the second network element 43 also retrieves the number of transmitted bytes, and restarts measuring i.e. logging, the transmitted bytes until the next Echo Request. The active transmission time defines the accumulated time during which data has been transmitted since the last Echo procedure, and more specifically the last Echo Request.

In response to receiving the Echo Request message in step 401, with the parameters "rxbytes", "txbytes" and "txtime" set to zero, the first network element 41 begins to monitor the number of received bytes from the second network element 43. The first network element 41 also starts logging its number of transmitted bytes and its active transmit time. This is preferably done in step 403, where the first network element 41 sends an Echo Response message to the second network element 43. This Echo Response message includes the parameters "rxbytes", "txbytes" and "txtime", defining the number of received bytes, the number of transmitted bytes, and the active transmission time, respectively, for the first network element 41 since its last Echo procedure. This initial Echo Response message will have the parameters "rxbytes", "txbytes" and "txtime" set to zero. It is noted that when the Echo Response message received by the second network element 43 is the first in the procedure, the second network element 43 retrieves the received number of bytes, and restarts measuring the received number of bytes until the next Echo Response.

Although the first network element 41 is described as sending the Echo Response message after starting to monitor the number of received bytes, and after starting to log the number of transmitted bytes and active transmit time, it will be appreciated that the precise order can be changed without departing from the scope of the invention. For example, the Echo Response message 403 can be sent prior to the first network element 41 starting to log received bytes, transmitted bytes and active transmit time, or concurrently with one or more of these procedures.

For example, according to one embodiment a node can start the logging of transmitted bytes in conjunction to the sending of an Echo message, preferably just after sending the echo message, thereby shortening the time difference before the receiving node starts logging the received number of bytes.

Likewise, although the second network element 43 above is described as starting to count or log the received number of bytes after receipt of the Echo Response message, a receiving node can also start counting or logging the received number of bytes in conjunction to receiving an Echo message, preferably just after receiving the Echo message.

Preferably the transmitting and receiving nodes are configured to commence logging their respective data in a consistent way, such that the delay between the actions of the two nodes is as small as possible.

When referring to counting or logging "data", it is noted that the invention embraces all possibilities, including the counting of just user plane data, just control plane data, or user plane and control plane data. According to one embodiment the counting involves the counting of payload data in the user plane, the payload data being sent with other messages than the echo (test) messages.

After initialisation of the procedure as described above, the first network element 41 and the second network element 43 exchange data in the normal course of events, as illustrated by step 405.

At a predetermined point thereafter, for example after a predetermined time T1, the second network element 43 retrieves the value Nrx corresponding to the received number bytes, the value Ntx corresponding to the number of transmitted bytes, and the value Xtx corresponding to the accumulated transmit time. The second network element 43 sends a new Echo Request message, step 407, containing the values rxbytes= Nrx, txbytes=Ntx and txtime=Xtx to the first network element 41. The second network element 43 then resets the parameters rxbytes, txbytes and txtime, and continues the monitoring of received bytes from the first network element 41.

In the described embodiment the procedure continues until it is terminated by the initiating party. It is noted, however, that the procedure may be explicitly initiated and terminated in a number ways, for example with the presence of dedicated information elements, predefined information element values, dedicated messages, or a combination thereof. The procedure may also be implicitly terminated by the initiating party ceasing to send Echo Requests.

Upon receiving the Echo Request message in step 407, the first network element 41 retrieves a value Mrx corresponding to the number of bytes it has received, a value Mtx corresponding to the number of bytes it has transmitted, and a value Ytx corresponding to its accumulated active transmit time. The first network element 41 then sends an Echo Response message to the second network element, step 409, containing the values rxbytes= Mrx, txbytes=Mtx and txtime=Ytx. The first network element 41 then resets the parameters rxbytes, txbytes and txtime to zero, and continues the monitoring of received bytes from the second network element 43. As above, in the described embodiment the procedure continues until it is terminated by the initiating party. It is noted, however, that the procedure may be explicitly initiated and terminated in a number ways, for example with the presence of dedicated information elements, predefined information element values, dedicated messages, or a combination thereof. The procedure may also be implicitly terminated by the initiating party ceasing to send Echo Requests.

Using the exchange of information described above, each of the first and second network elements 41, 43 is then able to determine the throughput and/or data loss for both its uplink and downlink as described below.

For example, the first network element 41 can determine the average measure of throughput and data loss on the uplink from the second network element 43 to the first network element as follows.

The first network element 41 is able to determine the throughput of the uplink from the second network element 43 to the first network element 41 by dividing the amount of data Mrx received from the second network element 43 by the active transmit time Xtx of the second network element (the value Xtx having been received by the first network element 41 from the second network element 43 in the Echo Request message as described in Figure 4, and the value Mrx monitored and retrieved locally at the first network element 41). In other words, the throughput of the uplink from the second network element 43 to the first network element 41 is given as:

## Throughput of Uplink = Mrx/Xtx.

In this way, by receiving the value Xtx corresponding to the active transmit time of the remote node (i.e. the second network element 43), a receiving node (i.e. the first network element 41) is able to determine a true throughput on the uplink from the remote node.

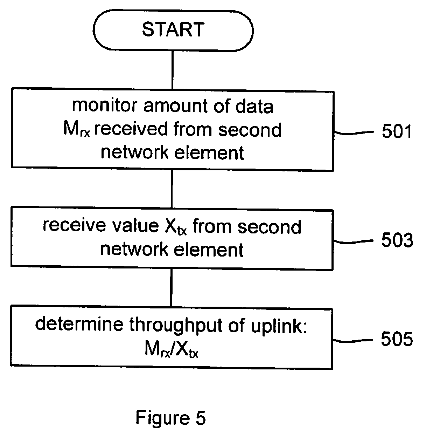

Figure 5 shows the steps performed at the first network element 41 when determining the throughput of the uplink to the first network element 41, as described above. In step 501 the first network element 41 monitors the amount of data received from a second network element 43, the amount of data providing a first value Mrx. In step 503 the first network element 41 receives from the second network element 43 a second value Xtx, the second value Xtx corresponding to a time period during which the second network element 43 has been transmitting data to the first network element 41. The first network element 41 can then use the first value Mrx and the second value Xtx, step 505, to determine the throughput of the communication link from the second network element 43 to the first network element 41, i.e. Mrx/Xtx.

The first network element 41 is able to determine the data loss of the uplink from the second network element 43 to the first network element 41 by monitoring the amount of data Mrx received from the second network element 43, and subtracting this value from the amount of data Ntx actually transmitted by the second network element 43, and then dividing the result by Ntx (the value Ntx having been received by the first network element 41 from the second network element 43 in the Echo Request message, and the value Mrx monitored and retrieved locally at the first network element). In other words, the data loss of the uplink from the second network element 43 to the first network element 41 is given as:

## Data loss of Uplink = (Ntx-Mrx)/Ntx

The data loss calculation given above is a "relative" data loss. It will be appreciated that the value can be expressed as a percentage by multiplying by a hundred. It is noted that the first network element 41 is also able to determine an average data loss over a period of time, for example per second, for the uplink from the second network element 43 to the first network element 41 by monitoring the amount of data Mrx received from the second network element 43, and subtracting this value from the amount of data Ntx actually transmitted by the second network element 43, and then dividing the result by the active transmit time Xtx of the second network element 43 (the values Ntx and Xtx having been received by the first network element 41 from the second network element 43 in the Echo Request message, and the value Mrx monitored and retrieved locally at the first network element). In other words, the data loss of the uplink from the second network element 43 to the first network element 41 in such an embodiment is given as:

$$\text{Data loss of Uplink} = (Ntx\text{-}Mrx)/Xtx$$

Also, as a further alternative to determining a "relative" data loss or an average data loss per second as described above, it is noted that the data loss may also be calculated as a quantitative value, i.e. Ntx-Mrx.

In is noted that the determination of data loss on the uplink can be made as an additional step to determining the throughput, or as an alternative step thereto.

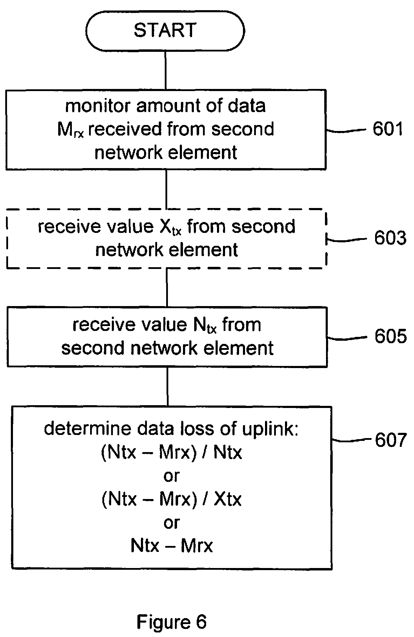

Figure 6 shows the steps performed at the first network element 41 when determining the data loss of the uplink to the first network element 41, as described above. In step 601 the first network element 41 monitors the amount of data received from a second network element 43, the amount of data providing a first value Mrx. In step 603 the first network element 41 may optionally receive from the second network element 43 a second value Xtx, the second value Xtx corresponding to a time period during which the second network element 43 has been transmitting data to the first network element 41. The second value may be used to determine a data loss over a period of time, for example the data loss per second as described further below. In step 605, the first network element 41 receives a third value, Ntx, from the second network element 43, the third value Ntx corresponding to the amount of data transmitted by the second network element 43 to the first network element 41 during the first time period Xtx. The first network element 41 can then use the first value Mrx and the third value Ntx, and optionally the second value Xtx, as shown in step 607, to determine the data loss of the communication link from the second network element 43 to the first network element 41, i.e. the data loss determined as (Ntx-Mrx)/Ntx, or (Ntx -Mrx), or (Ntx-Mrx)/Xtx.

In a similar manner to that described above, the first network element 41 can determine the average measure of throughput and/or data loss on the *downlink* from the first network element 41 to the second network element 43 as follows, i.e. in addition or as an alternative to determining the throughput and/or data loss for the *uplink* as described above.

The first network element 41 is able to determine the throughput of the downlink from the first network element 41 to the second network element 43 by dividing the amount of data Nrx received at the second network element 43 by the active transmit time Ytx of the first network element 41 (the value Nrx having been received by the first network element 41 from the second network element 43 in the Echo Request message, and the value Ytx monitored locally at the first network element 41). In other words, the throughput of the downlink from the first network element 41 to the second network element 43

is given as:

$$\text{Throughput of Downlink} = Nrx/Ytx$$

By receiving the value Nrx corresponding to the amount of data received at a remote node (i.e. the second network element 43), a sending node (i.e. the first network element 41) is able to determine a true throughput on its downlink to the remote node.

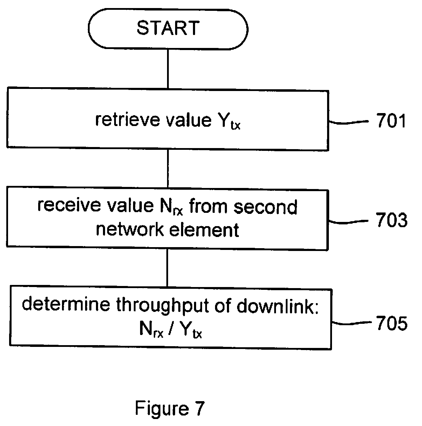

Figure 7 shows the steps performed at the first network element 41 when determining the throughput of the downlink from the first network element 41 to the second network element 43, as described above. In step 701 the first network element 41 retrieves a fourth value Ytx corresponding to a second time period during which the first network element 41 has been transmitting data to the second network element 43. In step 703, the first network element receives a fifth value Nrx from the second network element 43, the fifth value Nrx corresponding to the amount of data received at the second network element 43 from the first network element 41. It is noted that the steps 701 and 703 can be performed in any order, or simultaneous with one another. The first network element 41 can then use the fourth value Ytx and the fifth value Nrx, step 705, to determine the throughput of the downlink, i.e. the communication link from the first network element 41 to the second network element 43, i.e. Nrx/Ytx.

The first network element 41 is able to determine the "relative" data loss of the downlink from the first network element 41 to the second network element 43 by receiving a value corresponding the amount of data Nrx received at the second network element 43, and subtracting this value from the amount of data Mtx transmitted by the first network element 41, and then dividing the result by Mtx (the value Nrx having been received by the first network element 41 from the second network element in the Echo Request message, and the value Mtx monitored locally at the first network element 41). In other words, according to this embodiment the data loss of the downlink from the first network element 41 to the second network element 43 is given as:

$$\text{Data loss of Downlink} = (Mtx\text{-}Nrx)/Mtx$$

By receiving the value Nrx corresponding to the amount of data received at a remote node (i.e. the second network element 43), a sending node (i.e. the first network element 41) is able to determine a true data loss on its downlink to the remote node. The value of data loss given above can be expressed as a percentage by dividing by hundred.

According to another embodiment, the first network element 41 is able to determine the average data loss of the downlink over a period of time from the first network element 41 to the second network element 43, by receiving a value corresponding the amount of data Nrx received at the second network element 43, and subtracting this value from the amount of data Mtx transmitted by the first network element 41, and then dividing the result by the active transmit time Ytx of the first network element (the value Nrx having been received by the first network element 41 from the second network element in the Echo Request message, and the values Mtx and Ytx monitored locally at the first network element 41). In other words, the data loss of the downlink from the first network element 41 to the second network element 43 is given as:

## Data loss of Downlink = (Mtx-Nrx)/Ytx

As above, by receiving the value Nrx corresponding to the amount of data received at a remote node (i.e. the second network element 43), a sending node (i.e. the first network element 41) is able to determine a true data loss on its downlink to the remote node.

Also, as a further alternative to determining a "relative" data loss or an average data loss per second as described above, it is noted that the data loss may also be calculated as a quantitative value, i.e. Mtx-Nrx.

It is also noted that the determination of data loss on the downlink can be made in addition to, or as an alternative to determining the throughput on the downlink.

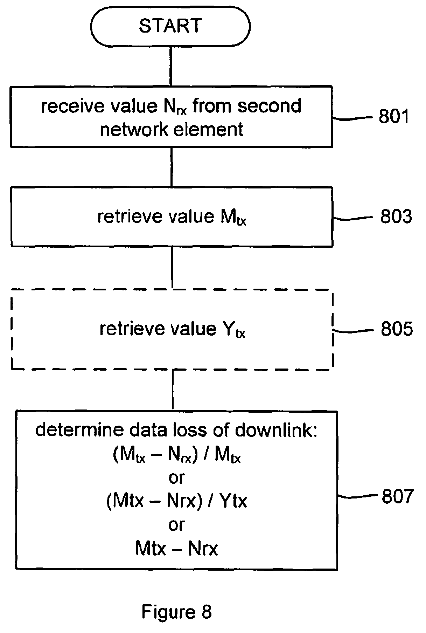

Figure 8 shows the steps performed at the first network element 41 when determining the data loss of the downlink from the first network element 41 to the second network element 43, as described above. In step 801, the first network element receives a fifth value Nrx from the second network element 43, the fifth value Nrx corresponding to the amount of data received at the second network element 43 from the first network element 41. In step 803 the first network element retrieves a sixth value Mtx corresponding to the amount of data transmitted from the first network element 41 to the second network element 43 during a second time period Ytx. Optionally, in step 805 the first network element 41 may also retrieve a fourth value Ytx corresponding to the second time period during which the first network element 41 has been transmitting data to the second network element 43. The first network element 41 can then use the fifth value Nrx and the sixth value Mtx, and optionally the fourth value Ytx, step 807, to determine the data loss of the downlink, i.e. the communication link from the first network element 41 to the second network element 43, i.e. (Mtx-Nrx)/Mtx or (Mtx-Nrx)/Ytx or (Mtx-Nrx).

It will be appreciated that the steps described above for the first network element 41 can also be applied to the second network element 43 for determining the true throughput and/or data loss of its respective downlink and uplink.

It will also be appreciated that, by exchanging the number of bytes received at respective nodes (i.e. the values Nrx, Mrx), this means that either node is able to perform a true calculation of throughput and/or data loss for both its downlink and uplink. In other words, the invention has the advantage of enabling a particular node to determine throughput or data loss for both a downlink from, or an uplink to that node. This procedure allows both ends of the communication link to derive an average edge-to-edge throughput measure and also an average packet loss estimate on a GTP level.

It is noted that the Echo Request message and Echo Response message need not necessarily transmit the parameter rxbytes (i.e. the values Nrx and Mrx), for example in a system where there is no desire to enable a particular node to determine throughput and/or data loss on both its uplink and downlink. In such a system a particular node would be limited to determining the true throughput and data loss for the uplink only.

Furthermore, it will be appreciated that the invention is not limited to the use of Echo Request and Echo Response messages having vendor extensions for conveying the information between the respective nodes, for example the RBS and SAE GW. Instead, other protocols or messages may be used for conveying the respective values of rxbytes, txbytes and txtime.

In the embodiments described above, the node initiating the procedure (i.e. the second network element 43 sending the original Echo Request message in step 401 of Figure 4) also terminates the procedure by ending the periodic Echo Request messages, for example after a preset time T1 (i.e. by sending a further Echo Request message in step 407 of Figure 4). It is noted, however, that the procedure can be initiated or terminated in other ways. For example, as mentioned above, the procedure may be explicitly initiated and terminated in a number of ways including, but not limited to, the presence of dedicated information elements, predefined information element values, dedicated messages, or a combination thereof. The procedure may also be implicitly terminated by the initiating party ceasing to send Echo Requests.

The first network element 41 ceases to monitor the received number of bytes at a second predetermined point, for example after a second predetermined time T2, where the second predetermined time T2 is greater than the first predetermined time T1. The predetermined times or intervals T1, T2 may be set using preset timers. It will be appreciated that the average throughput and data loss calculations can be made over varying durations of time, depending on the timers T1 and T2. It is also noted that the throughput/data loss can be determined at some point other than in response to a preset timer T1. For example, the measurement procedure can be initiated and terminated by some form of external action, such as by manual intervention. In the described embodiments a regular measurement procedure is described. However, the invention also encompasses a single, ad hoc, measurement being made.

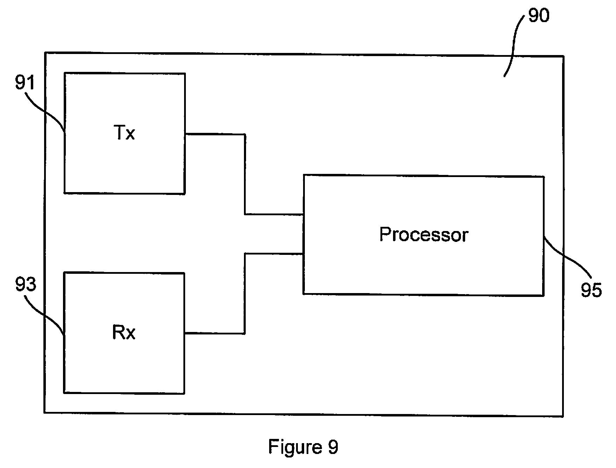

Figure 9 illustrates a network element 90 according to an embodiment of the present invention. The network element comprises transmission means 91 and receiver means 93, for example for sending and receiving protocols including Echo Request and Echo Response messages as described above. The network element 90 comprises processing means 95 adapted to perform the method described above in relation to Figures 4 to 8.

The invention described above allows the performance of the path between two nodes to be monitored, in terms of throughput or goodput, utilizing GTP and its inherent vendor extension. The performance measurements may be used, for example, to monitor that a particular service level is being kept or a Service Level Agreement (SLA) is met when the transport is leased by an Internet Service Provider (ISP), for example. The measurements may also be used to automatically trigger alarms when subsiding below a preset level.

Although the invention has been described using a solution for the GTP protocol, the same principals are applicable for other transport protocols. For example, if IPsec is used to protect and tunnel information similar methods could be applied. With IPsec, a control path exists between the peers where the Internet Key Exchange (IKE) protocol is used, IKEv2 (Version 2) is described in IETF specification RFC 4306. This protocol has a message that can be used to convey information to the peer, i.e. IKE Informal message, this message has the option to add 'private extensions', i.e. add new parameters that correspond to what have been described for GTP above in terms of informing peers about sent and received bytes.

It is further noted that, as alternative solutions for both GTP and IKEv2, standardised parameters may be used, or dedicated protocol messages defined in order to convey the same information concerning rxbytes, txbytes and txtime.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method in a first network element (1, 3, 5, 90) of a telecommunications network (2) for determining a quality of an uplink from a second network element (1, 3, 5, 90) to the first network element(1, 3, 5, 90), the method comprising:

> monitoring (501) an amount of data received from the second network element (1, 3, 5, 90), the amount of data received providing a first value, Mrx;

characterized in that the method further comprises the steps of:

> receiving (503) a second value, Xtx, from the second network element (1, 3, 5, 90), the second value, Xtx, corresponding to a first time period during which the second network element (1, 3, 5, 90) has been transmitting data to the first network element (1, 3, 5, 90); and
> wherein the method further comprises determining the quality of the uplink by determining (505) a throughput of the uplink from the second network element (1, 3, 5, 90) to the first network element (1, 3, 5, 90) using the first value, Mrx, and the second value, Xtx.

2. A method as claimed in claim 1 wherein:

> receiving comprises receiving (605) a third value, Ntx, from the second network element (1, 3, 5, 90), the third value, Ntx, corresponding to the amount of data transmitted by the second network element (1, 3, 5, 90) to the first network element (1, 3, 5, 90) during the first time period, Xtx; and
> wherein the method further comprises determining the quality of the uplink by determining (607) a data loss over the uplink from the second network element (1, 3, 5, 90) to the first network element (1, 3, 5, 90) using the first value, Mrx, and the third value, Ntx.

3. A method in a first network element (1, 3, 5, 90) of a telecommunications network (2) for determining a quality of a downlink from the first network element (1, 3, 5, 90) to a second network element (1, 3, 5, 90), the method comprising:

> monitoring (701) a fourth value, Ytx, the fourth value corresponding to a second time period during which the first network element (1, 3, 5, 90) has been transmitting data to the second network element (1, 3, 5, 90) **characterized in that** the method further comprises the steps of:
> receiving (703) a fifth value, Nrx, from the second network element (1, 3, 5, 90), the fifth value, Nrx, corresponding to the amount of data received at the second network element (1, 3, 5, 90) from the first network element (1, 3, 5, 90); and
> wherein the method further comprises determining the quality of the downlink by determining (705) a throughput of the downlink from the first network element (1, 3, 5, 90) to the second network element (1, 3, 5, 90) using the fourth value, Ytx and the fifth value, Nrx.

**4.** A method as claimed in claim 3, wherein:

monitoring comprises monitoring (803) a sixth value, Mtx, corresponding to the amount of data transmitted from the first network element (1, 3, 5, 90) to the second network element (1, 3, 5, 90) during the second time period, Ytx; and wherein the method further comprises determining the quality of the downlink by determining (807) a data loss over the downlink from the first network element (1, 3, 5, 90) to the second network element (1, 3, 5, 90) using the sixth value, Mtx, and the fifth value, Nrx.

**5.** A method as claimed in any one of claims 1 to 2 or 3 to 4 wherein a value received from the second network element (1, 3, 5, 90) is received in an Echo Request message.

**6.** A method as claimed in any one of claims 1 to 2 or 3 to 4 or 5, wherein the method is performed at predetermined intervals during a communication session between the first network element (1, 3, 5, 90) and the second network element (1, 3, 5, 90).

**7.** A network element (1, 3, 5, 90) of a telecommunications network (2), the network element comprising:

monitoring means (95) for monitoring an amount of data received from the second network element (1, 3, 5, 90), the amount of data received providing a first value, Mrx;
**characterized in that** the network element further comprises:

receiving means (93) for receiving a second value, Xtx, from the second network element (1, 3, 5, 90), the second value, Xtx, corresponding to a first time period during which the second network element (1, 3, 5, 90) has been transmitting data to the network element (1, 3, 5, 90); and
determining means (95) for determining a quality of an uplink from a second network element (1, 3, 5, 90) to the first network element (1, 3, 5, 90) by determining a throughput of the uplink from the second network element (1, 3, 5, 90) to the network element (1, 3, 5, 90) using the first value, Mrx and the second value, Xtx.

**8.** A network element (1, 3, 5, 90) as claimed in claim 7, wherein:

the receiving means (93) is adapted to receive a third value, Ntx, from the second network element (1, 3, 5, 90), the third value, Ntx, corresponding to the amount of data transmitted by the second network element (1, 3, 5, 90) to the network element (1, 3, 5, 90) during the first time period, Xtx; and
the determining means (95) is adapted for determining the quality of an uplink from a second network element (1, 3, 5, 90) to the first network element (1, 3, 5, 90) by determining a data loss over the uplink from the second network element (1, 3, 5, 90) to the network element (1, 3, 5, 90) using the first value, Mrx, and the third value, Ntx.

**9.** A network element (1, 3, 5, 90) of a telecommunications network (2), the network element (1, 3, 5, 90) comprising:

monitoring means (95) for monitoring a fourth value, Ytx, the fourth value corresponding to a second time period during which the first network element (1, 3, 5, 90) has been transmitting data to the second network element (1, 3, 5, 90);
**characterized in that** the network element further comprises:

receiving means (93) for receiving a fifth value, Nrx, from the second network element (1, 3, 5, 90), the fifth value, Nrx, corresponding to the amount of data received at the second network element (1, 3, 5, 90) from the first network element (1, 3, 5, 90); and
determining means (95) for determining a quality of a downlink from the first network element (1, 3, 5, 90) to the second network element (1, 3, 5, 90) by determining a throughput of the downlink from the first network element (1, 3, 5, 90) to the second network element (1, 3, 5, 90) using the fourth value, Ytx, and the fifth value, Nrx.

**10.** A network element (1, 3, 5, 90) as claimed in claim 9, wherein:

the monitoring means (95) is adapted to monitor a sixth value, Mtx, corresponding to the amount of data transmitted from the first network element (1, 3, 5, 90) to the second network element (1, 3, 5, 90) during the second time period, Ytx; and
wherein the determining means (95) is adapted to determining the quality of a downlink from a first network element (1, 3, 5, 90) to the second network element (1, 3, 5, 90) by determining a data loss over the downlink from the first network element (1, 3, 5, 90) to the second network element (1, 3, 5, 90) using the sixth value, Mtx, and the fifth value, Nrx.

**11.** A network element (1, 3, 5, 90) as claimed in any one of claims 7 to 8 or 9 to 10, wherein the receiving means (93) is adapted to receive a value transmitted from the second network element (1, 3, 5, 90) to the network element (1, 3, 5, 90) in an Echo Request message.

12. A network element (1, 3, 5, 90) as claimed in any one of claims 7 to 8 or 9 to 10 or 11, wherein the network element (1, 3, 5, 90) is adapted to determine the throughput and/or data loss at predetermined intervals.

**Patentansprüche**

1. Verfahren in einem ersten Netzelement (1, 3, 5, 90) eines Telekommunikationsnetzes (2) zum Bestimmen einer Qualität einer Aufwärtsstrecke von einem zweiten Netzelement (1, 3, 5, 90) zum ersten Netzelement (1, 3, 5, 90), wobei das Verfahren umfasst:

Überwachen (501) einer Datenmenge, die vom zweiten Netzelement (1, 3, 5, 90) empfangen wird, wobei die empfangene Datenmenge einen ersten Wert Mrx bereitstellt;
**dadurch gekennzeichnet, dass** das Verfahren ferner die folgenden Schritte umfasst:

Empfangen (503) eines zweiten Werts Xtx vom zweiten Netzelement (1, 3, 5, 90), wobei der zweite Wert Xtx einer ersten Zeitperiode entspricht, in der das zweite Netzelement (1, 3, 5, 90) Daten zum ersten Netzelement (1, 3, 5, 90) gesendet hat; und
wobei das Verfahren ferner ein Bestimmen der Qualität der Aufwärtsstrecke durch Bestimmen (505) eines Durchsatzes der Aufwärtsstrecke vom zweiten Netzelement (1, 3, 5, 90) zum ersten Netzelement (1, 3, 5, 90) unter Verwendung des ersten Werts Mrx und des zweiten Werts Xtx umfasst.

2. Verfahren nach Anspruch 1, wobei:

das Empfangen ein Empfangen (605) eines dritten Werts Ntx vom zweiten Netzelement (1, 3, 5, 90) umfasst, wobei der dritte Wert Ntx der Datenmenge entspricht, die vom zweiten Netzelement (1, 3, 5, 90) zum ersten Netzelement (1, 3, 5, 90) in der ersten Zeitperiode Xtx gesendet wurde; und
wobei das Verfahren ferner ein Bestimmen der Qualität der Aufwärtsstrecke durch Bestimmen (607) eines Datenverlusts über die Aufwärtsstrecke vom zweiten Netzelement (1, 3, 5, 90) zum ersten Netzelement (1, 3, 5, 90) unter Verwendung des ersten Werts Mrx und des dritten Werts Ntx umfasst.

3. Verfahren in einem ersten Netzelement (1, 3, 5, 90) eines Telekommunikationsnetzes (2) zum Bestimmen einer Qualität einer Abwärtsstrecke vom ersten Netzelement (1, 3, 5, 90) zum zweiten Netzelement (1, 3, 5, 90), wobei das Verfahren umfasst:

Überwachen (701) eines vierten Wertes Ytx, wobei der vierte Wert einer zweiten Zeitperiode entspricht, in der das erste Netzelement (1, 3, 5, 90) Daten zum zweiten Netzelement (1, 3, 5, 90) gesendet hat,
**dadurch gekennzeichnet, dass** das Verfahren ferner die folgenden Schritte umfasst:

Empfangen (703) eines fünften Werts Nrx vom zweiten Netzelement (1, 3, 5, 90), wobei der fünfte Wert Nrx der Datenmenge entspricht, die beim zweiten Netzelement (1, 3, 5, 90) vom ersten Netzelement (1, 3, 5, 90) empfangen wurde; und
wobei das Verfahren ferner ein Bestimmen der Qualität der Abwärtsstrecke durch Bestimmen (705) eines Durchsatzes der Abwärtsstrecke vom ersten Netzelement (1, 3, 5, 90) zum zweiten Netzelement (1, 3, 5, 90) unter Verwendung des vierten Werts Ytx und des fünften Werts Nrx umfasst.

4. Verfahren nach Anspruch 3, wobei:

das Überwachen ein Überwaschen (803) eines sechsten Werts Mtx umfasst, welcher der Datenmenge entspricht, die in der zweiten Zeitperiode Ytx vom ersten Netzelement (1, 3, 5, 90) zum zweiten Netzelement (1, 3, 5, 90) gesendet wurde; und
wobei das Verfahren ferner ein Bestimmen der Qualität der Abwärtsstrecke durch Bestimmen (807) eines Datenverlusts über die Abwärtsstrecke vom ersten Netzelement (1, 3, 5, 90) zum zweiten Netzelement (1, 3, 5, 90) unter Verwendung des sechsten Werts Mtx und des fünften Werts Nrx umfasst.

5. Verfahren nach einem der Ansprüche 1 bis 2 oder 3 bis 4, wobei ein Wert, der vom zweiten Netzelement (1, 3, 5, 90) empfangen wird, in einer Echo-Anfrage-Nachricht empfangen wird.

6. Verfahren nach einem der Ansprüche 1 bis 2 oder 3 bis 4 oder 5, wobei das Verfahren in vorgegebenen Intervallen während einer Kommunikationssitzung zwischen dem ersten Netzelement (1, 3, 5, 90) und dem zweiten Netzelement (1, 3, 5, 90) durchgeführt wird.

7. Netzelement (1, 3, 5, 90) eines Telekommunikationsnetzes (2), wobei das Netzelement umfasst:

Überwachungsmittel (95) zum Überwachen einer Datenmenge, die vom zweiten Netzelement (1, 3, 5, 90) empfangen wird, wobei die empfangene Datenmenge einen ersten Wert Mrx bereitstellt;
**dadurch gekennzeichnet, dass** das Netzelement ferner umfasst:

Empfangsmittel (93) zum Empfangen eines zweiten Werts Xtx vom zweiten Netzelement (1, 3, 5, 90), wobei der zweite Wert Xtx einer ersten Zeitperiode entspricht, in der das zweite Netzelement (1, 3, 5, 90) Daten zum ersten Netzelement (1, 3, 5, 90) gesendet hat; und
Bestimmungsmittel (95) zum Bestimmen einer Qualität einer Aufwärtsstrecke von einem zweiten Netzelement (1, 3, 5, 90) zum ersten Netzelement (1, 3, 5, 90) durch Bestimmen eines Durchsatzes der Aufwärtsstrecke vom zweiten Netzelement (1, 3, 5, 90) zum ersten Netzelement (1, 3, 5, 90) unter Verwendung des ersten Werts Mrx und des zweiten Werts Xtx.

8. Netzelement (1, 3, 5, 90) nach Anspruch 7, wobei:

das Empfangsmittel (93) zum Empfangen eines dritten Werts Ntx vom zweiten Netzelement (1, 3, 5, 90) ausgebildet ist, wobei der dritte Wert Ntx der Datenmenge entspricht, die vom zweiten Netzelement (1, 3, 5, 90) zum ersten Netzelement (1, 3, 5, 90) in der ersten Zeitperiode Xtx gesendet wurde; und
das Bestimmungsmittel (95) zum Bestimmen der Qualität einer Aufwärtsstrecke vom zweiten Netzelement (1, 3, 5, 90) zum ersten Netzelement (1, 3, 5, 90) durch Bestimmen eines Datenverlusts über die Aufwärtsstrecke vom zweiten Netzelement (1, 3, 5, 90) zum Netzelement (1, 3, 5, 90) unter Verwendung des ersten Werts Mrx und des dritten Werts Ntx ausgebildet ist.

9. Netzelement (1, 3, 5, 90) eines Telekommunikationsnetzes (2), wobei das Netzelement (1, 3, 5, 90) umfasst:

Überwachungsmittel (95) zum Überwachen eines vierten Wertes Ytx, wobei der vierte Wert einer zweiten Zeitperiode entspricht, in der das erste Netzelement (1, 3, 5, 90) Daten zum zweiten Netzelement (1, 3, 5, 90) gesendet hat,
**dadurch gekennzeichnet, dass** Netzelement ferner umfasst:

Empfangsmittel (93) zum Empfangen eines fünften Werts Nrx vom zweiten Netzelement (1, 3, 5, 90), wobei der fünfte Wert Nrx der Datenmenge entspricht, die beim zweiten Netzelement (1, 3, 5, 90) vom ersten Netzelement (1, 3, 5, 90) empfangen wurde; und
Bestimmungsmittel (95) zum Bestimmen einer Qualität einer Abwärtsstrecke vom ersten Netzelement (1, 3, 5, 90) zum zweiten Netzelement (1, 3, 5, 90) durch Bestimmen eines Durchsatzes der Abwärtsstrecke vom ersten Netzelement (1, 3, 5, 90) zum zweiten Netzelement (1, 3, 5, 90) unter Verwendung des vierten Werts Ytx und des fünften Werts Nrx.

10. Netzelement (1, 3, 5, 90) nach Anspruch 9, wobei:

das Überwachungsmittel (95) zum Überwachen eines sechsten Werts Mtx ausgebildet ist, welcher der Datenmenge entspricht, die in der zweiten Zeitperiode Ytx vom ersten Netzelement (1, 3, 5, 90) zum zweiten Netzelement (1, 3, 5, 90) gesendet wurde; und
wobei das Bestimmungsmittel (95) zum Bestimmen der Qualität der Abwärtsstrecke von einem ersten (1, 3, 5, 90) zum zweiten (1, 3, 5, 90) durch Bestimmen eines Datenverlusts über die Abwärtsstrecke vom ersten Netzelement (1, 3, 5, 90) zum zweiten Netzelement (1, 3, 5, 90) unter Verwendung des sechsten Werts Mtx und des fünften Werts Nrx ausgebildet ist.

11. Netzelement (1, 3, 5, 90) nach einem der Ansprüche 7 bis 8 oder 9 bis 10, wobei das Empfangsmittel (93) zum Empfangen eines Werts ausgebildet ist, der vom zweiten Netzelement (1, 3, 5, 90) zum ersten Netzelement (1, 3, 5, 90) in einer Echo-Anfrage-Nachricht gesendet wird.

12. Netzelement (1, 3, 5, 90) nach einem der Ansprüche 7 bis 8 oder 9 bis 10 oder 11, wobei das Netzelement (1, 3, 5, 90) zum Bestimmen des Durchsatzes und/oder Datenverlusts in vorgegebenen Intervallen ausgebildet ist.

**Revendications**

1. Procédé dans un premier élément de réseau (1, 3, 5, 90) d'un réseau de télécommunications (2) pour déterminer une qualité d'une liaison montante allant d'un second élément de réseau (1, 3, 5, 90) au premier élément de réseau (1, 3, 5, 90), le procédé comprenant :

le contrôle (501) d'une quantité de données reçues en provenance du second élément de réseau (1, 3, 5, 90), la quantité de données reçues fournissant une première valeur, Mrx ;

**caractérisé en ce que** le procédé comprend en outre les étapes de :

réception (503) d'une deuxième valeur, Xtx, en provenance du second élément de réseau (1, 3, 5, 90), la deuxième valeur, Xtx, correspondant à une première période de temps pendant laquelle le second élément de réseau (1, 3, 5, 90) a transmis des données au premier élément de réseau (1, 3, 5, 90) ; et

dans lequel le procédé comprend en outre la détermination de la qualité de la liaison montante en déterminant (505) un débit de la liaison montante depuis le second élément de réseau (1, 3, 5, 90) jusqu'au premier élément de réseau (1, 3, 5, 90) en utilisant la première valeur, Mrx, et la deuxième valeur, Xtx.

**2.** Procédé selon la revendication 1, dans lequel :

la réception comprend la réception (605) d'une troisième valeur, Ntx, en provenance du second élément de réseau (1, 3, 5, 90), la troisième valeur, Ntx, correspondant à la quantité de données transmises par le second élément de réseau (1, 3, 5, 90) au premier élément de réseau (1, 3, 5, 90) pendant la première période de temps, Xtx ; et

dans lequel le procédé comprend en outre la détermination de la qualité de la liaison montante en déterminant (607) une perte de données sur la liaison montante depuis le second élément de réseau (1, 3, 5, 90) jusqu'au premier élément de réseau (1, 3, 5, 90) en utilisant la première valeur, Mrx, et la troisième valeur, Ntx.

**3.** Procédé dans un premier élément de réseau (1, 3, 5, 90) d'un réseau de télécommunications (2) pour déterminer une qualité d'une liaison descendante allant du premier élément de réseau (1, 3, 5, 90) à un second élément de réseau (1, 3, 5, 90), le procédé comprenant :

le contrôle (701) d'une quatrième valeur, Ytx, la quatrième valeur correspondant à une seconde période de temps pendant laquelle le premier élément de réseau (1, 3, 5, 90) a transmis des données au second élément de réseau (1, 3, 5, 90) **caractérisé en ce que** le procédé comprend en outre les étapes de :

réception (703) d'une cinquième valeur, Nrx, en provenance du second élément de réseau (1, 3, 5, 90), la cinquième valeur, Nrx, correspondant à la quantité de données reçues au niveau du second élément de réseau (1, 3, 5, 90) en provenance du premier élément de réseau (1, 3, 5, 90) ; et dans lequel le procédé comprend en outre la détermination de la qualité de la liaison descendante en déterminant (705) un débit de la liaison descendante allant du premier élément de réseau (1, 3, 5, 90) au second élément de réseau (1, 3, 5, 90) en utilisant la quatrième valeur, Ytx, et la cinquième valeur, Nrx.

**4.** Procédé selon la revendication 3, dans lequel :

le contrôle comprend le contrôle (803) d'une sixième valeur, Mtx, correspondant à la quantité de données transmises du premier élément de réseau (1, 3, 5, 90) au second élément de réseau (1, 3, 5, 90) pendant la seconde période de temps, Ytx ; et

dans lequel le procédé comprend en outre la détermination de la qualité de la liaison descendante en déterminant (807) une perte de données sur la liaison descendante allant du premier élément de réseau (1, 3, 5, 90) au second élément de réseau (1, 3, 5, 90) en utilisant la sixième valeur, Mtx, et la cinquième valeur, Nrx.

**5.** Procédé selon l'une quelconque des revendications 1 à 2 ou 3 à 4, dans lequel une valeur reçue en provenance du second élément de réseau (1, 3, 5, 90) est reçue dans un message de Demande d'Écho.

**6.** Procédé selon l'une quelconque des revendications 1 à 2 ou 3 à 4 ou 5, dans lequel le procédé est effectué à des intervalles prédéterminés pendant une session de communication entre le premier élément de réseau (1, 3, 5, 90) et le second élément de réseau (1, 3, 5, 90).

**7.** Élément de réseau (1, 3, 5, 90) d'un réseau de télécommunications (2), l'élément de réseau comprenant :

un moyen de contrôle (95) pour contrôler une quantité de données reçues en provenance du second élément de réseau (1, 3, 5, 90), la quantité de données reçues fournissant une première valeur, Mrx ;
**caractérisé en ce que** l'élément de réseau comprend en outre :

un moyen de réception (93) pour recevoir une deuxième valeur, Xtx, en provenance du second élément de réseau (1, 3, 5, 90), la deuxième valeur, Xtx, correspondant à une première période de temps pendant laquelle le second élément de réseau (1, 3, 5, 90) a transmis des données à l'élément de réseau (1, 3, 5, 90) ; et

un moyen de détermination (95) pour déterminer une qualité d'une liaison montante allant d'un second élément de réseau (1, 3, 5, 90) au premier élément de réseau (1, 3, 5, 90) en déterminant un débit de la liaison montante allant du second élément de réseau (1, 3, 5, 90) à l'élément de réseau (1, 3, 5, 90) en utilisant la première valeur, Mrx, et la deuxième valeur, Xtx.

8. Élément de réseau (1, 3, 5, 90) selon la revendication 7, dans lequel :

le moyen de réception (93) est conçu pour recevoir une troisième valeur, Ntx, en provenance du second élément de réseau (1, 3, 5, 90), la troisième valeur, Ntx, correspondant à la quantité de données transmises par le second élément de réseau (1, 3, 5, 90) à l'élément de réseau (1, 3, 5, 90) pendant la première période de temps, Xtx ; et

le moyen de détermination (95) est conçu pour déterminer la qualité d'une liaison montante allant d'un second élément de réseau (1, 3, 5, 90) au premier élément de réseau (1, 3, 5, 90) en déterminant une perte de données sur la liaison montante allant du second élément de réseau (1, 3, 5, 90) à l'élément de réseau (1, 3, 5, 90) en utilisant la première valeur, Mrx, et la troisième valeur, Ntx.

9. Élément de réseau (1, 3, 5, 90) d'un réseau de télécommunications (2), l'élément de réseau (1, 3, 5, 90) comprenant :

un moyen de contrôle (95) pour contrôler une quatrième valeur, Ytx, la quatrième valeur correspondant à une seconde période de temps pendant laquelle le premier élément de réseau (1, 3, 5, 90) a transmis des données au second élément de réseau (1, 3, 5, 90) ;

**caractérisé en ce que** l'élément de réseau comprend en outre :

un moyen de réception (93) pour recevoir une cinquième valeur, Nrx, en provenance du second élément de réseau (1, 3, 5, 90), la cinquième valeur, Nrx, correspondant à la quantité de données reçues au niveau du second élément de réseau (1, 3, 5, 90) en provenance du premier élément de réseau (1, 3, 5, 90) ; et

un moyen de détermination (95) pour déterminer une qualité d'une liaison descendante allant du premier élément de réseau (1, 3, 5, 90) au second élément de réseau (1, 3, 5, 90) en déterminant un débit de la liaison descendante allant du premier élément de réseau (1, 3, 5, 90) au second élément de réseau (1, 3, 5, 90) en utilisant la quatrième valeur, Ytx, et la cinquième valeur, Nrx.

10. Élément de réseau (1, 3, 5, 90) selon la revendication 9, dans lequel :

le moyen de contrôle (95) est conçu pour contrôler une sixième valeur, Mtx, correspondant à la quantité de données transmises du premier élément de réseau (1, 3, 5, 90) au second élément de réseau (1, 3, 5, 90) pendant la seconde période de temps, Ytx ; et

dans lequel le moyen de détermination (95) est conçu pour déterminer la qualité d'une liaison descendante allant d'un premier élément de réseau (1, 3, 5, 90) au second élément de réseau (1, 3, 5, 90) en déterminant une perte de données sur la liaison descendante allant du premier élément de réseau (1, 3, 5, 90) au second élément de réseau (1, 3, 5, 90) en utilisant la sixième valeur, Mtx, et la cinquième valeur, Nrx.

11. Élément de réseau (1, 3, 5, 90) selon l'une quelconque des revendications 7 à 8 ou 9 à 10, dans lequel le moyen de réception (93) est conçu pour recevoir une valeur transmise du second élément de réseau (1, 3, 5, 90) à l'élément de réseau (1, 3, 5, 90) dans un message de Demande d'Écho.

12. Élément de réseau (1, 3, 5, 90) selon l'une quelconque des revendications 7 à 8 ou 9 à 10 ou 11, dans lequel l'élément de réseau (1, 3, 5, 90) est conçu pour déterminer le débit et/ou la perte de données à des intervalles prédéterminés.

Figure 1

Figure 2

| GTP-U |
| UDP |
| Ipv6 (RFC 2460)<br>and/or<br>IPv4 (RFC 791) |
| Data link layer |
| Physical layer |

Figure 3

Figure 4

START

monitor amount of data
$M_{rx}$ received from second
network element ———— 501

receive value $X_{tx}$ from second
network element ———— 503

determine throughput of uplink:
$M_{rx}/X_{tx}$ ———— 505

Figure 5

START

monitor amount of data
$M_{rx}$ received from second
network element — 601

receive value $X_{tx}$ from second
network element — 603

receive value $N_{tx}$ from
second network element — 605

determine data loss of uplink:
(Ntx – Mrx) / Ntx
or
(Ntx – Mrx) / Xtx
or
Ntx – Mrx
— 607

Figure 6

START

retrieve value $Y_{tx}$ —— 701

receive value $N_{rx}$ from second network element —— 703

determine throughput of downlink: $N_{rx} / Y_{tx}$ —— 705

Figure 7

START

receive value $N_{rx}$ from second network element — 801

retrieve value $M_{tx}$ — 803

retrieve value $Y_{tx}$ — 805

determine data loss of downlink:
$(M_{tx} - N_{rx}) / M_{tx}$
or
$(Mtx - Nrx) / Ytx$
or
$Mtx - Nrx$
— 807

Figure 8

Figure 9

**EP 2 396 989 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007016337 A2
- US 20060215596 A1
- US 20070230413 A1